# EUROPEAN PATENT APPLICATION

(11) **EP 1 988 282 A2**
(43) Date of publication of application: **05.11.2008**
(21) Application number: 08251472.0
(22) Date of filing: 21.04.2008
(51) Int. Cl.: F03D 1/02, F03D 9/00, F03D 11/00

(54) **High electricity production wind generator**

(30) Priority: 26.04.2007 ES 200701123
(71) Applicant: M. Torres Diseños Industriales, S.A.U., 31119 Torres De Elorz (Navarra) (ES)
(72) Inventor: Torres Martinez, Manuel, 31007 Pamplona (ES)
(74) Representative: Evens, Paul Jonathan

(57) **Abstract**

The invention relates to a high electricity production wind generator consisting of a functional assembly with at least two identical generators (5), the rotors (6) of which are incorporated on a common shaft (7) which can be coupled to one or two drive wind rotors (3), the generators (5) being driven according to a synchronized drive in the same direction.

## Description

### Field of the Art

The present invention relates to wind generators intended for electric power production by the action of the wind, proposing a wind generator provided with features which allow achieving a high power production maintaining the dimensional order of the size of the structural elements.

### State of the Art

The worldwide demand for renewable energy in order to deal with climate change involves wind energy in an important manner, this energy mainly being developed by means of blade rotor wind generators.

The development of said wind generators and their application for power production by means of using wind require wind generators with increasingly greater power rating which are more efficient and have a lower cost per kilowatt of power generated.

The power generation by means of such wind generators is mainly affected by the sweep surface of the blades of the rotor receiving the action of the wind on one hand, and the revolutions of the generator which is actuated for power production on the other hand.

Therefore, a solution for increasing the power generation capacity of the mentioned wind generators is the increase in the size of the blades and of the generator, but this gives rise to collateral problems because of the difficulties that arise both in the transport aspect, due to the necessary vehicles and highway traffic regulations, and in the aspect of the constructive assembly of the wind generators, due to the types of cranes which must be used.

Due to these problems involved in the increase in the size of wind generators, research has been aimed at developing solutions based on particular arrangements of the blades and of the generator, fulfilling an effect that is identical or similar to the increases in size for power production.

In this sense, patent US 4 213 057 describes a device for making use of wind energy, incorporating a blade rotor at the front part and another blade rotor at the rear part.

Patent US 5 506 453 describes in turn a wind generator with this same arrangement of a blade rotor at the front part and another blade rotor at the rear part, such that said rotors make the driven part and the drive part of a generator rotate in opposite directions.

Patent EP 767 877 also has a wind generator with two blade rotors, one at the front part and the other one at the rear part, rotating in opposite directions, both of them providing a rotational movement through respective shafts to a gear box converting said movements into the drive of a perpendicular drive shaft of a generator.

### Object of the Invention

According to the present invention, a wind generator is proposed provided with an embodiment of its functional assembly which allows achieving high power generation capacities without the dimensional increase of the structural elements, in an advantageous manner compared to the existing solutions for the same purpose.

This wind generator object of the invention includes a functional assembly formed by at least two identical generators with their rotor parts incorporated on a common shaft which can be coupled to one or two wind blade rotors at the ends.

A functional assembly of the wind generator allowing a high power production capacity with relatively small structural dimensions is thus obtained, since the multiple generators incorporated allow multiplying power production with the same drive means.

The arrangement of the rotating parts of the multiple generators on a common shaft further eliminates the need for complicated and expensive couplings, both in the mechanical assembly and for the electrical synchronization of the production outputs.

Tubular aluminium profiles are further provided in relation to the periphery of the static parts (stators) of the mentioned generators of the functional assembly of the wind generator, which profiles are located at the outer part of the body of the wind generator in the assembly arrangement therein, such that said profiles act as heat sinks, very effectively determining the cooling of the stators of the generators of the functional assembly.

Due to the foregoing, the wind generator of the invention has truly advantageous features, acquiring its own identity and a preferred character for achieving high power production capacities without a considerable dimensional increase of the structural elements.

### Description of the Drawings

Figure 1 shows a front view of a wind generator according to the object of the invention.
Figure 2 shows a more enlarged side view of said wind generator of the previous figure.
Figure 3 shows a sectioned side view of the body of the previous wind generator.
Figure 4 shows a front view of the functional assembly of the same wind generator.
Figure 5 shows a perspective of the assembly of the previous figure.

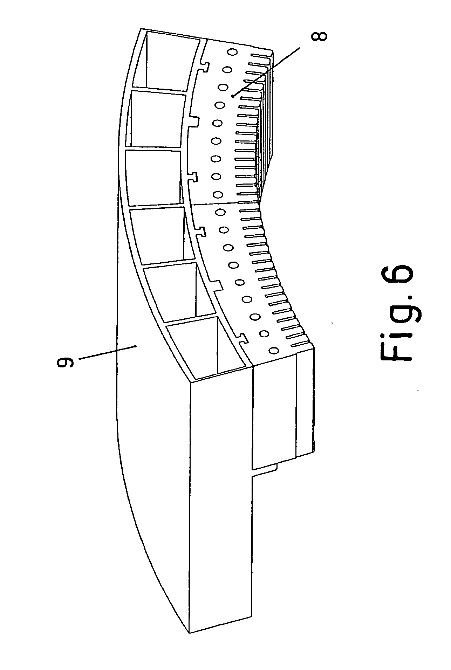

Figure 6 shows a perspective view of a partial area of the stator of one of the generators of the wind generator of the invention.
Figure 7 shows a front view of the wind generator of the invention with two blade rotors.
Figure 8 shows a side view of the embodiment of the wind generator according to the previous figure.
Figure 9 shows a perspective of the functional assembly of the wind generator according to said previous embodiment.
Figure 10 shows a front view of the wind generator with two blade rotors provided with only two blades.
Figure 11 shows a side view of the wind generator according to the embodiment of the previous figure.
Figure 12 shows a perspective of the functional assembly of the wind generator according to said previous embodiment.

### Detailed Description of the Invention

The object of the invention relates to a wind generator intended for electric power production, of the type comprising a body (1) arranged on a support column (2), the functional electric power production assembly being located inside said body (1), which functional assembly is driven by means of at least one wind rotor (3) provided with blades (4) which is driven by the wind.

According to the invention, the functional assembly of the wind generator comprises at least two identical generators (5), with the rotating parts or rotors (6) thereof assembled on a common shaft (7) receiving the drive from the wind rotor or rotors (3).

With this arrangement, the wind generator works conventionally, i.e. it captures the action of the wind by means of the blades (4) of the wind rotor or rotors (3), thereby producing a rotating drive which is transmitted to the shaft (7) and therefore to the rotors (6) of the generators (5), which gives rise to electricity production for each of said generators (5).

A high electricity production capacity can thus be obtained with relatively small dimensions of the elements forming the wind generator and particularly of the blades (4) and of the generators (5), since such production capacity results from the sum of the production provided by the different generators (5), which can be two or more in number arranged on the common shaft (7) according to the desired power generation capacity.

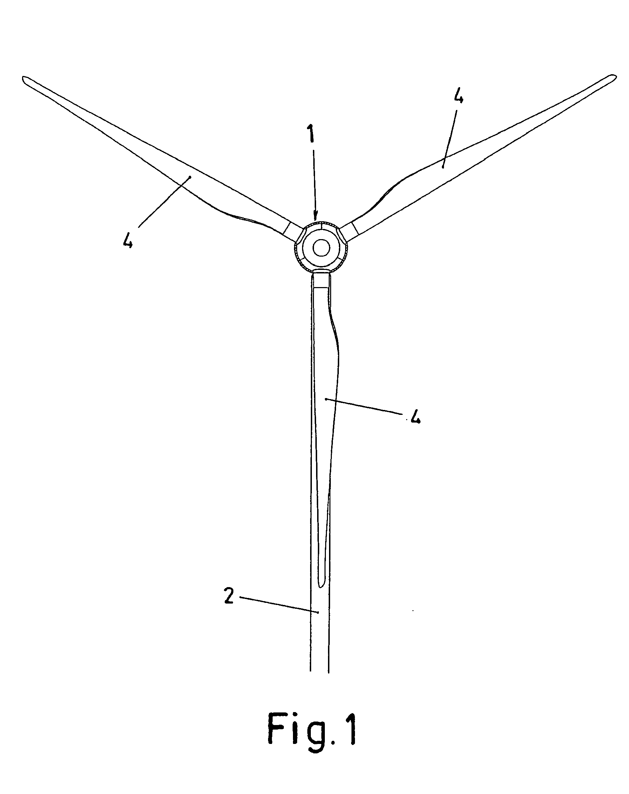

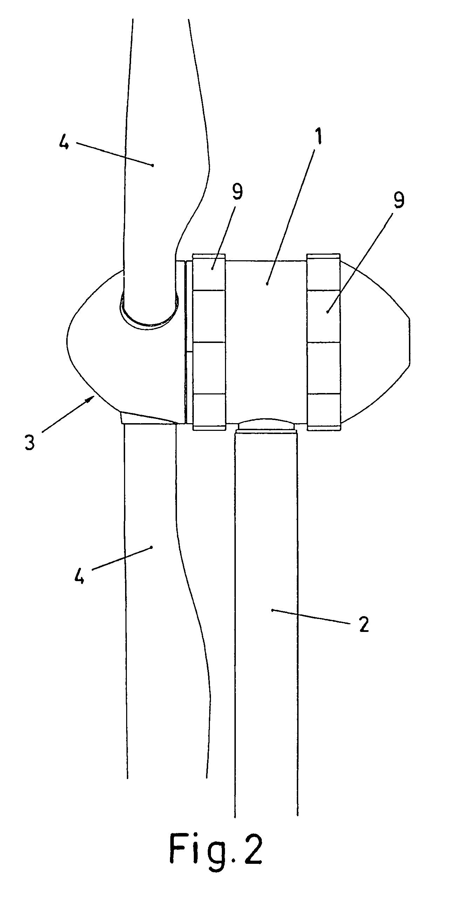

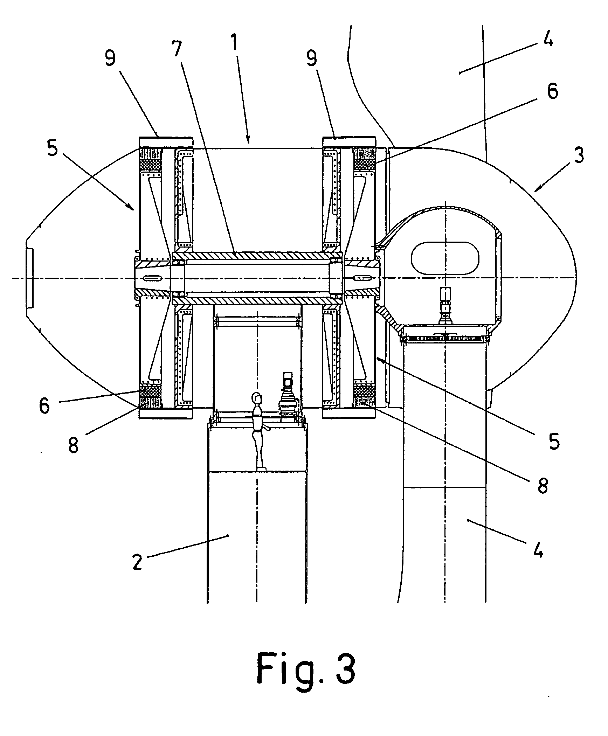

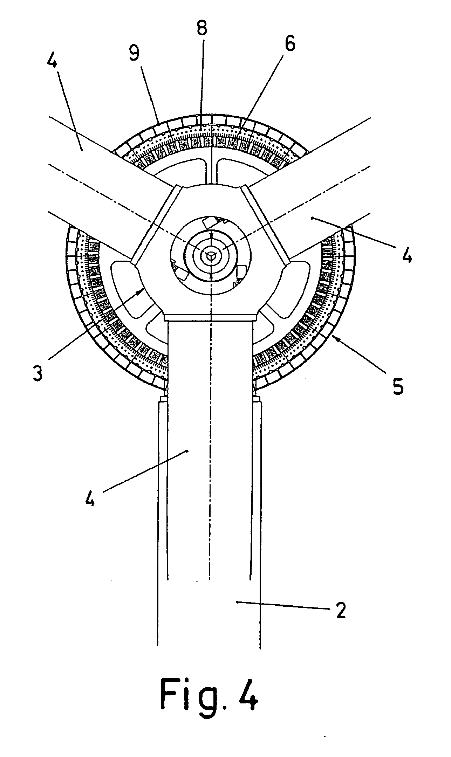

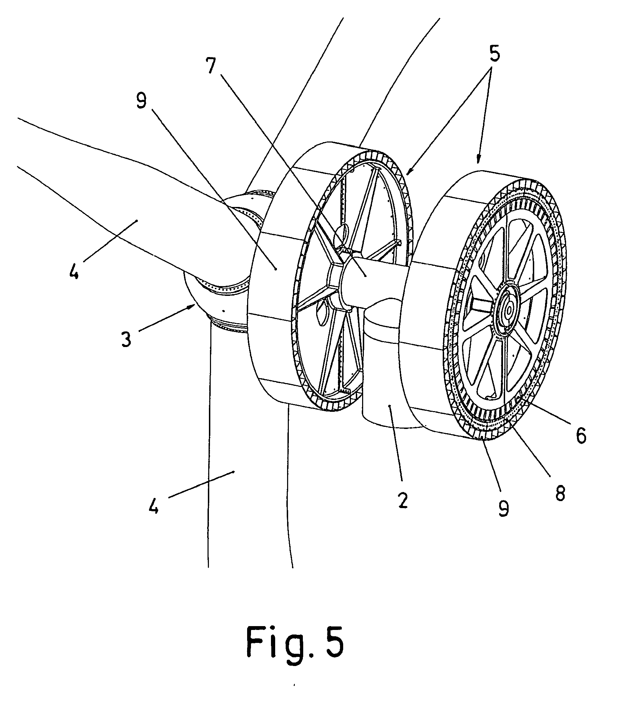

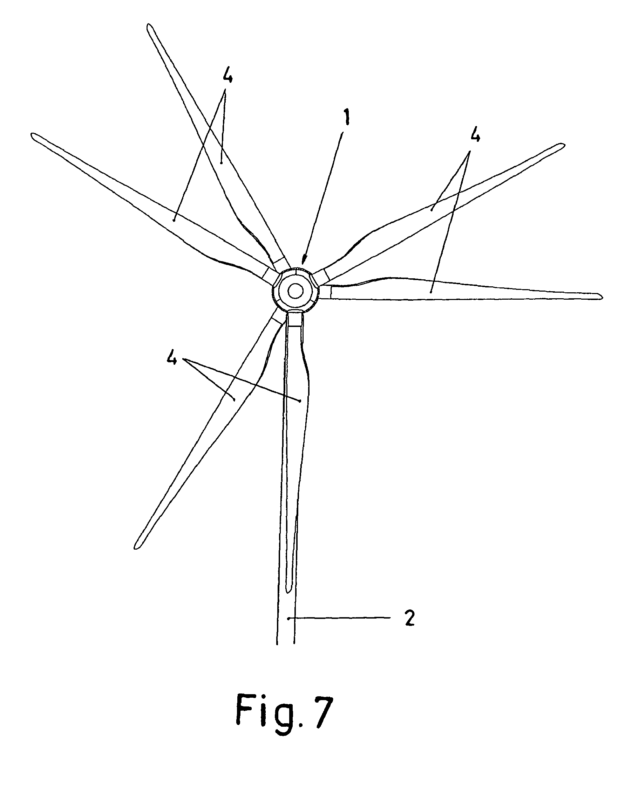

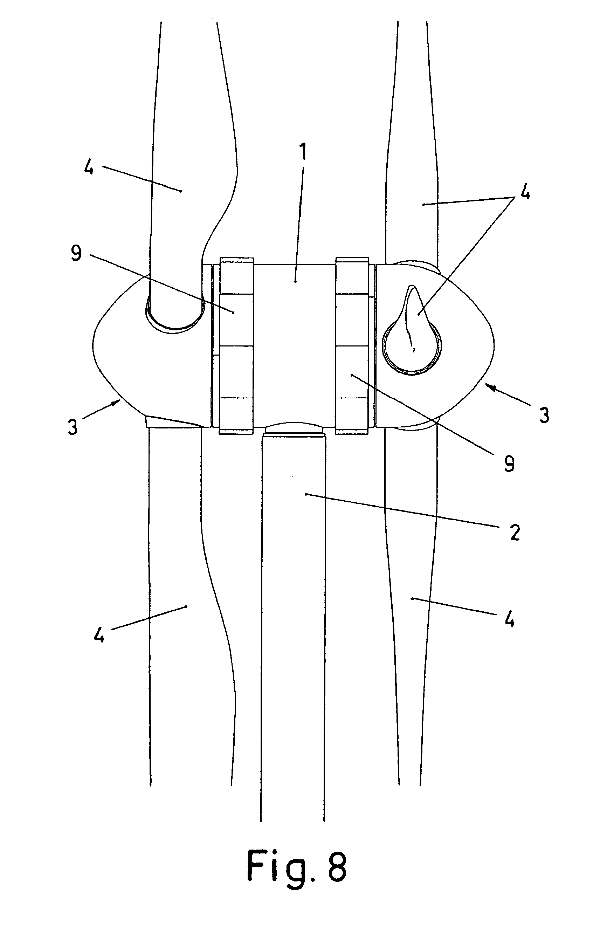

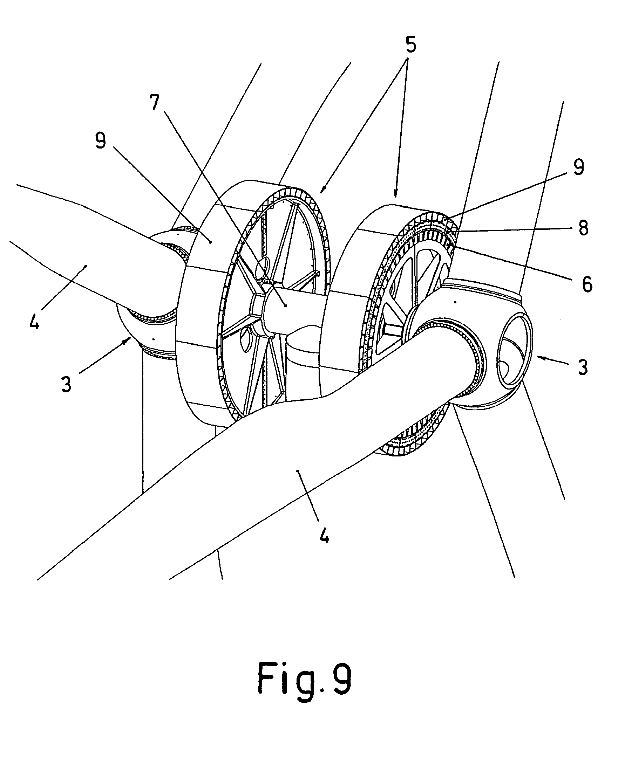

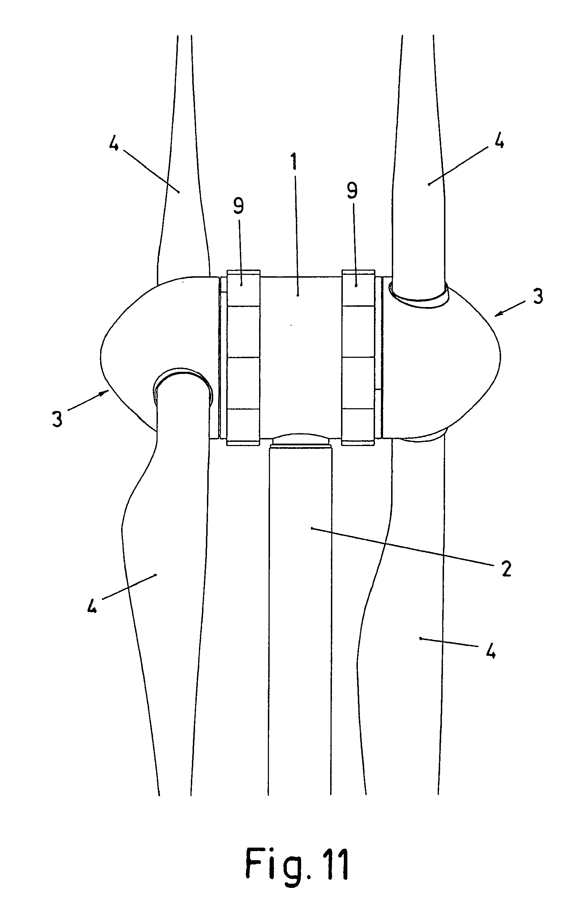

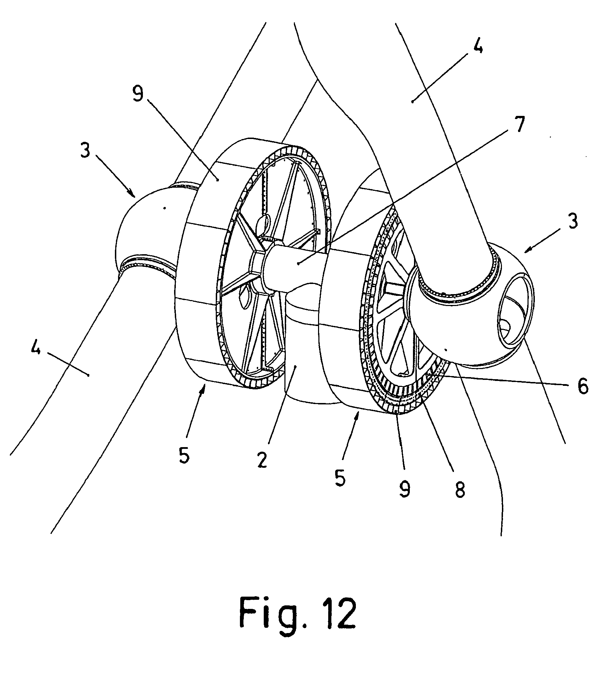

In such conditions, the shaft (7) on which the rotors (6) of the generators (5) are incorporated can be coupled to a single wind rotor (3) arranged at one end, like in the embodiment of Figures 1 to 5, but likewise, without this altering the concept of the number of identical generators (5) arranged on the common shaft (7), said shaft (7) can also be coupled to two wind rotors (3) which are arranged one at each end, i.e. one rotor at the front part and the other rotor at the rear part of the wind generator, like in the embodiments of Figures 7 to 12.

In this case, the two wind rotors (3) are expected to be arranged offset to one another by a certain angle, so that the blades (4) thereof do not act as a wind shade but rather, on the contrary, upon being offset, between both of them they cover a larger surface in the perpendicular sweep area in relation to wind reception, thus achieving greater effectiveness of the drive of the functional assembly by said action of the wind.

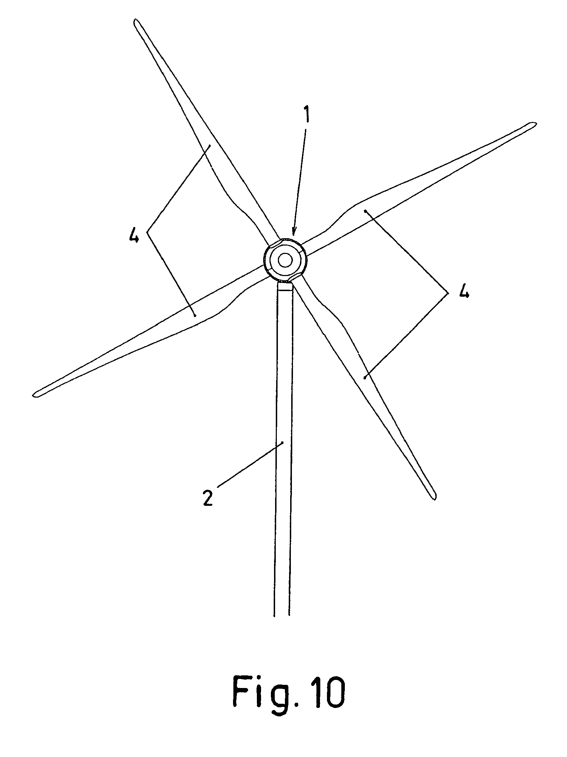

With such arrangement, the wind rotors (3) can have three blades (4) like in the embodiment of Figures 7 to 9, but they can also have only two blades (4) like in the embodiment of Figures 10 to 12, since the complementary sweep of the two wind rotors in relation to the wind also allows achieving an effective drive in the latter case.

In the constructive embodiment, the generators (5) are provided with their rotors (6) formed with permanent magnets, whereby when operating said rotors (6) do not produce heat and therefore it is not necessary to apply a cooling system therein.

In addition, tubular aluminium profiles (9) are arranged on the periphery of the stators (8) of the mentioned generators (5), which profiles are located at the outer part of the body (1) in the constructive assembly arrangement of the wind generator, such that said profiles (9) determine an air circulation passage whereby, as a result of the good heat conductivity of their material, they form an effective cooling system to dissipate the heat produced by the mentioned stators (8) of the generators (5) in power production operation.

## Claims

1. A high electricity production wind generator, of the type comprising at least one wind rotor provided with blades for capturing the action of the wind as a rotating drive means for a functional assembly provided with electricity production means, **characterized in that** the functional electricity production assembly is provided with at least two identical generators (5), the rotors (6) of which are incorporated on a common shaft (7) which can be coupled to one or two drive wind rotors (3).

2. A high electricity production wind generator according to claim 1, **characterized in that** the rotors (6) of two or more generators (5) are arranged on the shaft (7) of the functional assembly, which generators are driven by means of said shaft (7) according to a synchronized rotating drive in the same direction.

3. A high electricity production wind generator according to claims 1 and 2, **characterized in that** tubular aluminium profiles (9) are arranged on the periphery of the stators (8) of the multiple generators (5), which profiles are located at the outer part of the body (1) of the wind generator in the assembly arrangement thereof, forming a cooling system for the mentioned stators (8) of the generators (5).
